# EUROPÄISCHE PATENTSCHRIFT

(11) **EP 1 974 151 B1**
(45) Veröffentlichungstag und Bekanntmachung des Hinweises auf die Patenterteilung: **03.02.2010**
(21) Anmeldenummer: 06819922.3
(22) Anmeldetag: 07.12.2006
(51) Int. Cl.: F16F 1/38, B61F 5/30

(54) **LAGERUNG EINER DREHSTABFEDER DES ANTIWANKSYSTEMS EINES SCHIENENFAHRZEUGES**
BEARING OF A TORSION BAR SPRING OF THE ROLL STABILIZATION SYSTEM OF A TRACK VEHICLE
PALIER POUR SUSPENSION À BARRE DE TORSION DU SYSTÈME ANTI-ROULIS D'UN VÉHICULE FERROVIAIRE

(30) Priorität: 16.01.2006 AT 632006
(43) Veröffentlichungstag der Anmeldung: 01.10.2008
(73) Patentinhaber: Siemens AG Österreich, 1210 Wien (AT)
(72) Erfinder: HOJAK, Gerhard, A-8020 Graz (AT)
(74) Vertreter: Peham, Alois
(86) Internationale Anmeldenummer: PCT/EP2006/069399
(87) Internationale Veröffentlichungsnummer: WO 2007/087924

(56) Entgegenhaltungen:
- EP-A2- 1 067 307
- US-A1- 3 939 779
- US-A1- 4 172 591

## Beschreibung

Die Erfindung bezieht sich auf ein Lager für die Lagerung einer Drehstabfeder des Antiwanksystems eines Schienenfahrzeuges, mit einer geteilten Lagerbuchse für die Drehstabfeder und mit einer die Lagerbuchse umfassenden, geteilten Lagerschale, welche mit dem Wagenkasten verbindbar ist.

Die zunehmende Verwendung von Luftfedersystemen in modernen Schienenfahrzeugen, welche den Fahrkomfort erheblich steigern, bedingt aus technischer Sicht den Einsatz von (Anti)wanksystemen, um Wankschwingungen (Rollen) in Grenzen zu halten. Ein (Anti)wanksystem besteht dabei grundsätzlich aus einer Drehstabfeder, Zug/Druck-Stangen und zwei Drehstablagerungen. Die Drehstabfeder verläuft im allgemeinen quer zur Fahrtrichtung, und ist am Wagenkasten gelagert. Von ihren beiden Enden führen die Zug/Druck-Stangen zum Drehgestell. Des Antiwanksystems kann auch in umgekehrter Richtung angeordnet sein. In diesem Fall ist die Drehstabfeder am Drehgestell gelagert. Von ihren beiden Enden führen die Zug/Druck-Stangen zum Wagenkasten. Je Drehgestell können eine oder zwei Drehstabfedern vorgesehen sein.

An die Lagerung der Drehstabfeder werden besondere Anforderungen gestellt, vor allem Spielfreiheit und geringer Verschleiß über eine lange Einsatzdauer bei kardanischer Verformbarkeit und hoher eindeutiger Steifigkeit. Andererseits muss ein Verschmutzen der Gleitflächen sowie ein Festklemmen während der langen Einsatzzeit mit hoher Sicherheit vermieden werden.

Eine besondere Verschärfung erfahren diese Forderungen, falls einteilige, im Endbereich gebogene Drehstabfedern zum Einsatz kommen. Die Lagerbuchsen und Lagerschalen solcher Drehstabfedern können nicht einteilig ausgebildet werden, da sonst ein Aufschieben über die gekrümmten Enden der Drehstabfeder bzw. über die geschmiedeten Endstücke der Stäbe, welche zur Verbindung mit den Zug/Druck-Stangen dienen, nicht möglich wäre. Vielmehr werden die Lagerbuchsen zweiteilig (vgl. EP-A2-1 067 307) oder einmalig geschnitten ausgeführt. Durch die zweiteilige Ausbildung der Lagerschalen (Stahlteile) verschärfen sich die Probleme einerseits einer Abdichtung des Lagerinneren nach außen und andererseits der geforderten Spielfreiheit, wodurch die Forderungen hinsichtlich geringster möglicher Verschmutzung, geringem Verschleiß und Spiel sowie eindeutiger Steifigkeit über eine lange Einsatzdauer bisher nicht erfüllt werden konnten.

Aus den genannten Gründen sind bei Verwendung von Wankstablagerungen an gebogenen Drehstabfedern nach dem Stand der Technik kurze Tauschintervalle der Lager und/oder eine erweiterte Konstruktion mit einer Nachschmiermöglichkeit erforderlich. Dazu müssen dies Lager zerlegt und die Lagerbuchsen ausgetauscht werden, oder Fett durch eine Bohrung, z.B. über einen Schmiernippel zur Lagerfläche gebracht werden. Außerdem ist es in Hinblick auf eine Verteilung des Schmierfettes auf der gesamten Gleitfläche notwendig, die Lagerbuchse mit Nuten zu versehen, was deren Fertigung verteuert. Das Festlegen von Schmierintervallen erhöht den Wartungsaufwand, wobei ein Nichteinhalten der Wartungs-/Schmierintervalle die Gleitpaarung zwischen Drehstabfeder und Lager derart in Mitleidenschaft ziehen kann, dass ein bedenklicher Materialabtrag an der Drehstabfeder austritt abgesehen von einer nicht mehr tragbaren Geräuschentwicklung in den Lagern.

Auf die Verwendung geteilter Lager kann nur bei einer besondere Ausbildung der Drehstabfedern verzichtet werden, bei welcher die Hebel, an denen die Zug/Druck-Stangen angreifen, mit Hilfe einer Press- oder Keilverbindung mit der Drehstabfeder verbunden werden. Die Lagerung erfolgt dann weiter außen an den Enden der Drehstabfeder. Diese Konstruktion ist nicht nur teuer sondern führt auch zu einer sehr breiten Bauweise des Antiwanksystems.

Eine Aufgabe der Erfindung liegt darin, ein Lager zu schaffen, durch welche die oben genannten Probleme weitgehend beseitigt sind.

Diese Aufgabe wird mit einem Lager nach Anspruch 1 gelöst.

Dank der Erfindung ergeben sich insbesondere ein spielfreier Einsatz des Antiwanksystems über die gesamte, wesentlich gesteigerte Einsatz- und Lebensdauer, das Vermeiden einer Geräuschentwicklung, keine Nachschmierintervalle zwischen Hauptuntersuchungen der Drehgestelle und dadurch insgesamt eine erhöhte Verfügbarkeit des Schienenfahrzeugs.

Bei einer zweckmäßigen Ausführungsform ist vorgesehen, dass eine Dichtung zwei Dichtlippen besitzt, wobei eine Dichtlippe der anderen Dichtung zwischen diese beiden Dichtlippen eingreift. Diese labyrinthartige Konstruktion ergibt verbesserte Dichteigenschaften.

Weiters kann es vorteilhaft sein, wenn die Innendichtung einen zylindrischen Abschnitt aufweist, der zur Anlage auf der Drehstabfeder bestimmt ist und von dem die zumindest eine Dichtlippe radial absteht. Hierdurch ergibt sich eine besonders wirksame Abdichtung gegen die Oberfläche der Drehstabfeder.

Die Abdichtung zur Lagerschale wird weiters verbessert, falls die Außendichtung (ADI) einen von der zumindest einen radialen Dichtlippe (DAL) abstehenden und umlaufenden Befestigungssteg (BFS) besitzt, der in einer Stirnnut (STN) der Lagerschale (LAS) aufgenommen ist.

Im Sinne eines guten Sitzes der Außendichtung in der Lagerschale kann es empfehlenswert sein, dass die Stirnnut zur Stirnfläche der Lagerschale hin konisch verengt ist

Um auf einfache Weise einen guten Sitz der Lagerbuchse in der Lagerschale zu erreichen, ist bei einer zweckdienlichen Variante vorgesehen, dass jeder Lagerbuchsenteil einen nach außen abstehenden Sicherungsvorsprung aufweist, dem eine passend ausgebildete Ausnehmung in einem Lagerschalenteil zugeordnet ist.

Eine andere vorteilhafte Variante zeichnet sich durch eine an beiden Endbereichen der Drehstabfeder vorgesehene geteilte Halteklemme zur Sicherung der Drehstabfeder gegen axiales Verrutschen aus, wobei zwischen einer Stirnfläche der Halteklemme und der benachbarten Stirnfläche der Lagerschale ein Gleitring aus Kunststoff angeordnet ist.

Die Erfindung samt weiteren Vorteilen ist im folgenden an Hand einer beispielsweisen Ausführungsform näher erläutert, die in der Zeichnung veranschaulicht ist. In dieser zeigen
Fig. 1 eine Unteransicht einer Drehstabfeder eines (Anti)wanksystems an einem Schienenfahrzeug mit beidseits angeschlossenen Zug/Druck-Stangen,
Fig. 2 in vergrößerter Ansicht einen Schnitt im Bereich eines der beiden Lager der Drehstabfeder und
Fig. 3 weiter vergrößert ein Detail im Dichtungsbereich des Lagers

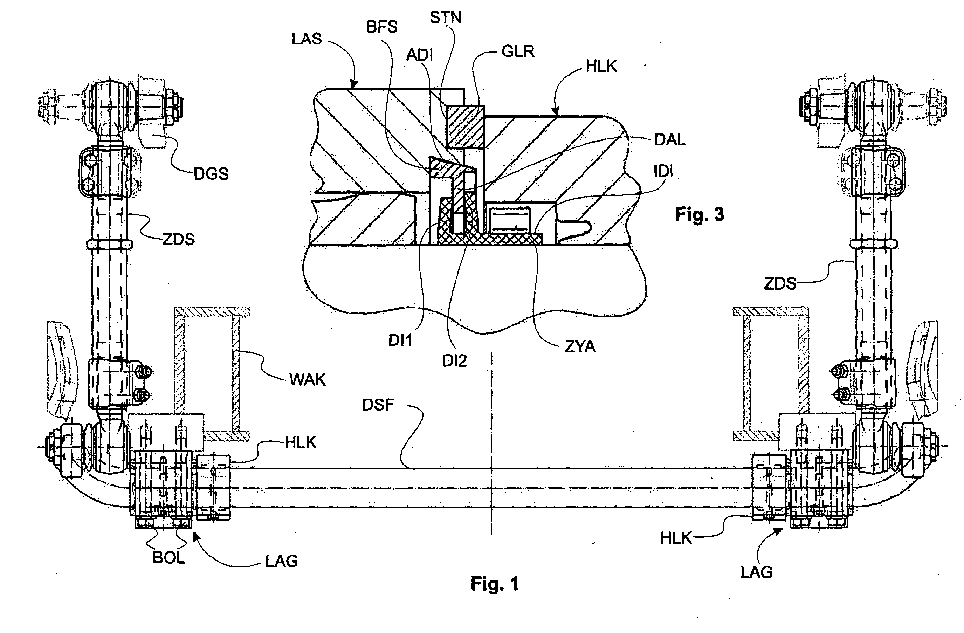

Fig. 1 zeigt allgemein eine Drehstabfeder DSF des Antiwanksystems eines Schienenfahrzeuges, wobei die Drehstabfeder DSF quer zur Fahrtrichtung an einem Drehgestell DGS angeordnet ist und mit Hilfe zweier Lager LAG an letzterem gelagert ist,

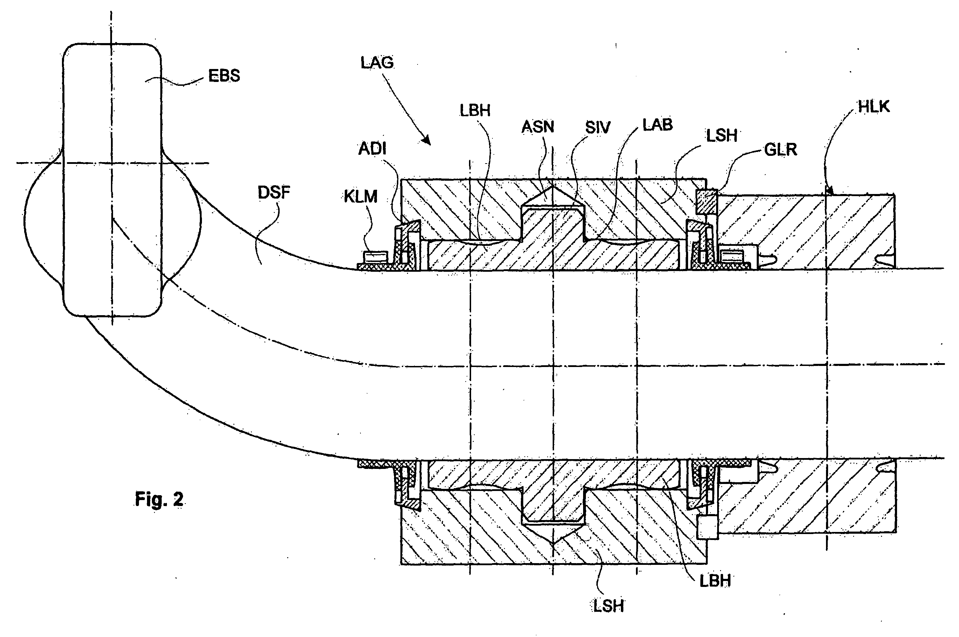

Die Drehstabfeder DSF ist über den größten Teil der Wagenbreite gerade ausgebildet, geht jedoch in ihren beiden Endbereichen über gekrümmten Bereichen in Wankstabaugen, das sind verbreiterte Endbefestigungsstücke EBS (Fig.2), über, mit deren Hilfe eine Verbindung mit je einem Ende einer linken bzw. rechten Zug/Druckstange ZDS möglich ist, deren anderes Ende mit einem Wagenkasten WAK verbunden werden kann. In Fig. 1 sind Wagenkasten WAK und Drehgestell DGS nur angedeutet und die Verbindungs- und Justierelemente der Zug/Druckstangen werden nicht weiters beschrieben oder bezeichnet, da sie für das Verständnis der Erfindung nicht wesentlich und darüber hinaus dem Fachmann bekannt sind.

Unter Bezugnahme auf die Fig. 2 und 3 erkennt man, dass ein erfindungsgemäßes Lager LAG eine Lagerbuchse LAB besitzt, in welcher ein gerader Abschnitt der Drehstabfeder DSF gleitend gelagert ist. Diese Lagerbuchse kann zweiteilig oder mit einem Längsschnitt ausgebildet sein. Radial an der Lagerbuchse LAB sind auf beiden Seiten nach außen abstehende Sicherungsvorsprünge SIV angebracht welche hier zylindrisch ausgebildet sind. Die Lagerbuchse besteht mit Vorteil aus einem Kunststoff mit guten Gleit- und Druckeigenschaften. Die äußere Oberfläche der Lagerbuchse LAB ist so ausgeformt, dass sie Toleranzen der Stahlbauteile und Radialbewegungen der Drehstabfeder gut ausgleichen kann. Bei einer empfehlenswerten Ausführung ist die Lagerbuchse LAB mit einem in der Zeichnung nicht ersichtlichen hochgleitfähigen Kunststoffschlauch versehen, der die Gleiteigenschaften im Lager LAG verbessern kann.

Die Lagerbuchse LAB bzw. deren Hälften LBH, wird von den Lagerschalen LAS umfasst, die gleichfalls zweiteilig ausgebildet sind, wobei jede Lagerschalenhälfte LSH eine Ausnehmung ASN besitzt, welche dem Sicherungsvorsprung der Lagerbuchsenhälften LSH angepasst ist, sodass die Lagerbuchse LAB innerhalb der Lagerschale LAS unverschiebbar und unverdrehbar gehalten ist. Die mit Vorteil aus Metall bestehenden Lagerschalenhälften sind auf geeignete Weise zusammengeklemmt und mit dem Wagenkasten oder Drehgestell verbunden, beispielsweise mit Hilfe von in Fig. 1 angedeuteten Schraubbolzen BOL.

An beiden Endseiten des Lagers ist ein Dichtungspaar vorgesehen, das je aus einer Innendichtung IDI und einer Außendichtung ADI besteht.

Wie im Detail aus Fig. 3 hervorgeht, besitzt die Innendichtung IDI einen zylindrischen Abschnitt ZYA (siehe Fig. 3), der mit seiner Innenfläche an der Außenfläche der Drehstabfeder DSF anliegt und beispielsweise mit Hilfe einer Klemme KLM gegen die Drehstab-Oberfläche gespannt ist. Von dem zylindrischen Abschnitt ZYA stehen zwei Dichtlippen DAL ab, die radial und parallel zueinander verlaufen, sodass sie einen Spalt zwischen sich bilden.

Die Außendichtung ADI besitzt eine radial nach innen abstehende Dichtlippe DAL von der ein umlaufender Befestigungssteg BFS absteht der in einer Stirnnut STN der Lagerschale LAS aufgenommen ist. Diese Stirnnut STN ist zur Stirnfläche der Lagerschale LAS hin konisch verengt, sodass ein guter Sitz der in der Lagerschale LAS gegeben ist.

Die radial nach innen abstehende Dichtlippe DAL der Außendichtung ADI greift in den zuvor genannten Spalt zwischen den zwei Dichtlippen DI1, DI2 der Innendichtung IDI ein, wodurch eine labyrinthartige Dichtung vorliegt. Es sei an dieser Stelle betont, dass - im Gegensatz zu Lagerbuchse LAB und Lagerschale LAS - die Außen- und die Innendichtung ADI, IDI umlaufend einstückig ausgebildet sind, was für ein gutes Abdichten erforderlich ist. Weiters ist es natürlich möglich, dass die Außendichtung zwei Dichtlippen besitzt und in den von diesen gebildeten Spalt eine Dichtlippe der Innendichtung eingreift. Ebenso können auch mehr als nur eine bzw. zwei Dichtlippen Verwendung finden.

Innendichtung und Außendichtung bestehen aus einem elastischen, jedoch abriebfesten Kunststoff oder Gummi.

An beiden Endbereichen der Drehstabfeder DSF (Fig. 1)ist eine geteilte Halteklemme HLK zur Sicherung der Drehstabfeder gegen axiales Verrutschen vorgesehen. Im Detail erkennt man diese Halteklemme in Fig. 2 bzw. 3. Da ein gegenseitiges Abstützen des linken bzw. rechten Lagers LAG an der zugehörigen Halteklemme erfolgen soll, ist zwischen einer Stirnfläche der Halteklemme und der benachbarten Stirnfläche der Lagerschale LAS ein Gleitring GLR aus Kunststoff angeordnet. Zeckmäßigerweise ist dieser Gleitring GLR in eine, in der Stirnfläche der Lagerschale LAS bzw. deren Hälften LS ausgebildeten, umlaufenden Stirnnut STN eingesetzt.

Vor dem Zusammenbau des Lagers werden die in Frage kommenden Gleitflächen mit einem Schmiermittel eingefettet, welches zusätzlich die Gleit- und Dichteigenschaften des Lagers verbessert.

Das Lager nach der Erfindung führt dank seiner Konstruktion zu einer wesentlich geringeren Geräuschentwicklung, der Materialabtrag an der Drehstabfeder ist praktisch vernachlässigbar und das Lagerspiel kann äußerst klein gehalten werden. Andererseits kann die durch die Biegung der Drehstabfeder entstehende Winkelstellung ausgeglichen und eingleichmäßiges Tragbild in der Lagerstelle erreicht werden. Durch den Einsatz ungeteilter Dichtungen lässt sich das Eindringen von Schmutz und Feuchtigkeit auf lange Zeit verhindern und dementsprechend die Lebensdauer erheblich verlängern. Die einteiligen Dichtungsteile können, da sie verformbar sind, über das aufgeschmiedete Wankstabauge der gebogenen Drehstabfeder gezogen werden. Daher müssen nicht wie bisher Dichtungsbauteile am Einsatzort geklebt werden, was zu Kantenbildung und zusätzlichem Abrieb geführt hat. Die Montage kann überdies rascher erfolgen, da die Trockenzeit der Klebestellen entfällt.
Das Lager nach der Erfindung kann natürlich auch für Drehstabfedern mit Außenlagerung verwendet werden, sodass die Wankstablagerung auf Modulen beruhen und die Verwendung von Gleichteilen möglich ist.

## Patentansprüche

1. Lager (LAG) für die Lagerung einer Drehstabfeder (DSF) des Antiwanksystems eines Schienenfahrzeuges, mit einer geteilten Lagerbuchse (LAB) für die gleitende Lagerung der Drehstabfeder und mit einer die Lagerbuchse umfassenden, geteilten Lagerschale (LAS), welche mit dem Wagenkasten/Drehgestell verbindbar ist, **dadurch gekennzeichnet, dass** an zumindest einer Endseite des Lagers (LAG) ein Dichtungspaar (ADI, IDI) vorgesehen ist, das aus einer inneren, flexiblen, auf der Drehstabfeder (DSF) sitzenden Innendichtung (IDI) und einer äußeren, flexiblen, in der Lagerschale (LAS) sitzenden Außendichtung (ADI) besteht, wobei jede Dichtung des Paares zumindest eine umlaufende Dichtlippe (DI1, DI2; DAL) aufweist, und die Dichtungen über die Dichtlippen dichtend zusammenwirken.

2. Lager nach A1, **dadurch gekennzeichnet, dass** eine Dichtung (IDI) zwei Dichtlippen (DI1, DI2) besitzt, wobei eine Dichtlippe (DAL) der anderen Dichtung (ADI) zwischen diese beiden Dichtlippen (DI1, DI2) eingreift.

3. Lager nach Anspruch 1 oder 2, **dadurch gekennzeichnet, dass** die Innendichtung (IDI) einen zylindrischen Abschnitt (ZYA) aufweist, der zur Anlage auf der Drehstabfeder (DSF) bestimmt ist und von dem die zumindest eine Dichtlippe (DAL) radial absteht.

4. Lager nach einem der Ansprüche 1 bis 3, **dadurch gekennzeichnet, dass** die Außendichtung (ADI) einen von der zumindest einen radialen Dichtlippe (DAL) abstehenden und umlaufenden Befestigungssteg (BFS) besitzt, der in einer Stirnnut (STN) der Lagerschale (LAS) aufgenommen ist.

5. Lager nach einem der Ansprüche 1 bis 4, **dadurch gekennzeichnet, dass** die Stirnnut (STN) zur Stirnfläche der Lagerschale (LAS) hin konisch verengt ist

6. Lager nach einem der Ansprüche 1 bis 5, **dadurch gekennzeichnet, dass** jeder Lagerbuchsenteil (LBH) einen nach außen abstehenden Sicherungsvorsprung (SIV) aufweist, dem eine passend ausgebildete Ausnehmung (ASN) in einem Lagerschalenteil (LSH) zugeordnet ist.

7. Lager nach einem der Ansprüche 1 bis 6, **gekennzeichnet durch** eine an beiden Endbereichen der Drehstabfeder (DSF) vorgesehene geteilte Halteklemme (HLK) zur Sicherung der Drehstabfeder gegen axiales Verrutschen, wobei zwischen einer Stirnfläche der Halteklemme und der benachbarten Stirnfläche der Lagerschale (LAS) ein Gleitring (GLR) aus Kunststoff angeordnet ist.

## Claims

1. Bearing (LAG) for supporting a torsion bar spring (DSF) of the roll stabilisation system of a track vehicle, with a split bearing bush (LAB) for the sliding support of the torsion bar spring and with a split bearing shell (LAS), which contains the bearing bush and which can be connected to the body/bogie, **characterised in that** a pair of seals (ADI, IDI) is provided on at least one end face of the bearing (LAG), consisting of an inner flexible inner seal (IDI) sitting on the torsion bar spring (DSF) and an outer flexible outer seal (ADI) sitting in the bearing shell (LAS), each seal of the pair having at least one peripheral sealing lip (DI1, DI2; DAL) and the seals interacting by way of the sealing lips in a sealing manner.

2. Bearing according to claim 1, **characterised in that** a seal (ISI) has two sealing lips (DI1, DI2), with one sealing lip (DAL) of the other seal (ADI) engaging between these two sealing lips (DI1, DI2) .

3. Bearing according to one claim 1 or 2, **characterised in that** the inner seal (IDI) has a cylindrical section (ZYA), which is intended to rest on the torsion bar spring (DSF) and from which the at least one sealing lip (DAL) projects radially.

4. Bearing according to one of claims 1 to 3, **characterised in that** the outer seal (ADI) has a peripheral fastening web, which projects from the at least one radial sealing lip (DAL) and is held in an end groove (STN) of the bearing shell (LAS).

5. Bearing according to one of claims 1 to 4, **characterised in that** the end groove (STN) tapers conically towards the end face of the bearing shell (LAS).

6. Bearing according to one of claims 1 to 5, **characterised in that** each bearing bush part (LBH) has a securing protrusion (SIV) that projects outwards, with which an appropriately configured recess (ASN) in a bearing shell part (LSH) is associated.

7. Bearing according to one of claims 1 to 6, **characterised by** a split retaining clamp (HLK) provided at both end regions of the torsion bar spring (DSF) to secure the torsion bar spring against axial slippage, with a slip ring (GLR) made of plastic arranged between an end face of the retaining clamp and the adjacent end face of the bearing shell (LAS).

## Revendications

1. Palier ( LAG ) pour le montage d'un ressort ( DSF ) de barre de torsion du système antiroulis d'un véhicule ferroviaire, comprenant un coussinet ( LAB ) fendu pour le montage glissant du ressort de barre de torsion et une coquille ( LAS ) de coussinet fendu entourant le coussinet et pouvant être reliée à la caisse/châssis, **caractérisé en ce que**, au moins sur un côté d'extrémité du palier ( LAG ), est prévue une paire ( ADI, IDI ) de garnitures d'étanchéité, qui est constituée d'une garniture ( IDI ) d'étanchéité intérieure souple reposant sur le ressort ( DSF ) de barre de torsion et d'une garniture ( ADI ) d'étanchéité extérieure souple reposant dans la coquille de coussinet, chaque garniture d'étanchéité de la paire ayant au moins une lèvre ( DI1, DI2, DAL ) d'étanchéité faisant le tour, les garnitures d'étanchéité coopérant de manière étanche par les lèvres d'étanchéité.

2. Palier suivant la revendication 1, **caractérisé en ce qu'**une garniture ( IDI ) d'étanchéité a deux lèvres ( DI1, DI2 ) d'étanchéité, une lèvre ( DAL ) d'étanchéité de l'autre garniture ( ADI ) d'étanchéité pénétrant entre ces deux lèvres ( DI1, DI2 ) d'étanchéité.

3. Palier suivant la revendication 1 ou 2, **caractérisé en ce que** la garniture ( IDI ) d'étanchéité intérieure a un segment ( ZYA ) cylindrique, qui est destiné à venir en contact avec le ressort ( DSF ) de barre de torsion et dont la au moins une lèvre ( DAL ) d'étanchéité fait saillie radialement.

4. Palier suivant l'une des revendications 1 à 3, **caractérisé en ce que** la garniture ( ADI ) d'étanchéité extérieure a une barrette ( BDS ) de fixation faisant saillie de la au moins une lèvre ( DAL ) d'étanchéité radiale faisant le tour et reçue dans une rainure ( STN ) frontale de la coquille ( LAS ) de coussinet.

5. Palier suivant l'une des revendications 1 à 4, **caractérisé en ce que** la rainure ( STN ) frontale se rétrécit coniquement vers la surface frontale de la coquille ( LAS ) du coussinet.

6. Palier suivant l'une des revendications 1 à 5, **caractérisé en ce que** chaque partie ( LBH ) de coussinet a une saillie ( SIV ) de sécurité qui fait saillie vers l'extérieur et à laquelle est associé un évidement ( ASN ) de constitution adapté dans une partie ( LSH ) dans la coquille de coussinet.

7. Palier suivant l'une des revendications 1 à 6, **caractérisé par** une pince ( HLK ) de maintien fendue prévue sur deux parties d'extrémité du ressort ( DSF ) de barre de torsion et destinée à empêcher le ressort de barre de torsion de glisser axialement, un anneau ( GLR ) de glissement en matière plastique étant disposé entre une surface frontale de la pince de maintien et la surface frontale voisine de la coquille ( LAS ) de palier.
